# EUROPÄISCHE PATENTANMELDUNG

(11) **EP 1 338 775 A2**
(43) Veröffentlichungstag der Anmeldung: **27.08.2003**
(21) Anmeldenummer: 02026633.4
(22) Anmeldetag: 29.11.2002
(51) Int. Cl.: F02D 11/10

(54) **Motoransteuerung für einen EC-Motor**

(30) Priorität: 22.02.2002 DE 10207565
(71) Anmelder: Pierburg GmbH, 41460 Neuss (DE)
(72) Erfinder: Zacher, Wolfgang, Dr., 04720 Döbeln (DE); Knoll, Andreas, 04746 Hartha (DE); Beyer, Stefan, 04654 Frohburg (DE)
(74) Vertreter: Dietrich, Barbara

(57) **Zusammenfassung**

Der Erfindung liegt die gedankliche Überlegung zugrunde, die Informationen für die Ansteuerung eines EC-Motors (3) aus der Stellung oder der Position des Stellorgans (5) selbst zu entnehmen, die über einen Stellgeber (6), wie Potentiometer, Hall-Geber usw. , gewonnen werden kann. Das Bestromungsmuster für den EC-Motor (5) kann dann beispielsweise in der Motorsteuerung (1) für das Stellorgan (5), einem Mikrocomputer , aufbereitet werden, ohne dass der Motor (5) über eine eigene Rotorlageerkennung verfügt.

## Beschreibung

Die Erfindung betrifft eine Motoransteuerung für einen EC-Motor zur Positionierung eines Stellorgans, insbesondere in Fahrzeugen.

Bekannte Motorsteuerungen vergleichen einen Sollwert mit einem von einem Potentiometer gelieferten Istwert zur Bestimmung der Stellung des Stellorgans. Ein in der Motorsteuerung vorhandener Regler erzeugt ein Signal, welches an einen Vierquadrantenverstärker geleitet wird. Mit dessen Hilfe wird dann eine solche Stromstärke in den Elektromotor getrieben, dass dieser die vom Sollwert vorgegebene Auslenkung des Stellorgans bewirkt.

Von diesem Stand der Technik ausgehend schlägt die DE 39 35 593 A1 vor, dass eine derartige Vorrichtung auf ein Potentiomenter zur Bestimmung des Lagesignals verzichten kann. Die Erfassung der Lage des Stellgliedes (Stellorgans) erfolgt in einem Ausführungsbeispiel durch die Messung und Auswertung der Teilbewegungen eines das Stellorgan verstellenden Gleichstrommotors. Dazu wird für jedes Weiterlaufen eines Ankersegments des Gleichstrommotors eine Flankenerkennung des Motorstroms durchgeführt, wobei ein Impuls augelöst und einem Regler zugeführt wird. In weiteren Ausführungsbeispielen wird anstelle der Flankenerkennungseinrichtung ein Hall-Geber bzw. eine Lichtdetektionseinrichtung eingesetzt.

Beim Einsatz eines elektronisch kommutierten Motors (EC-Motor) erfolgt die richtige Bestromung der einzelnen Motorwicklungen durch die Auswertung der Rotorlagesensoren des EC-Motors und Erzeugung eines entsprechenden Kommutierungsimpulses. Umfangreiche Ausführungen sind hierzu auch in der DE 100 65 488 A1 offenbart.

EC-Motore werden wegen der besseren Zuverlässigkeit zwar immer mehr bevorzugt deren Einsatz aber minimal gehalten, da EC-Motore den Nachteil aufweisen, dass sie zur Kommutierung eine Rotorlageerkennung und eine Kommutierungselektronik benötigen. Diese Bauteile machen den EC-Motor teuer.

Eine weitere Meßeinrichtung zur Ermittlung der Stellung eines Stellorgans ist in der DE 199 15 988 A1 beschrieben. Hier wird ein Hallsensor als Stellgeber verwendet, der programmierbar ist, wodurch temperaturbedingte Meßfehler korrigiert werden können. Bezüglich der Lageregelung /Lageerkennung des Motors bzw. der Motoransteuerung zur Verstellung des Stellorgans werden keine Aussagen getroffen.

Die Erfindung stellt sich die Aufgabe, eine einfache Motoransteuerung für einen ein Stellorgan verstellenden EC-Motor aufzuzeigen.

Gelöst wird die Aufgabe durch die Merkmale des Patentanspruchs 1.

Der Erfindung liegt die gedankliche Überlegung zugrunde, die Informationen für die Ansteuerung eines EC-Motors aus der Stellung oder der Position des Stellorgans selbst zu entnehmen, die über einen Stellgeber, wie Potentiometer, Hall-Geber usw. , gewonnen werden kann. Diese Überlegung beruht auf der Tatsache, dass die Stellung des Stellorgans als auch die Rotorposition des Motors immer miteinander korrellieren, wobei ein mögliches Getriebespiel bedeutungslos ist. Die Winkelinformation eines sonst im Motor vorhandenen Rotorlagegebers findet sich also auch im Signal des Stellgebers des Stellorgans wieder, sie sind redundant.
Das Bestromungsmuster für den EC-Motor kann dann beispielsweise in der Steuerung für das Stellorgan aufbereitet werden, ohne dass der Motor über eine eigene Rotorlageerkennung verfügt.

Vorteilhafte Ausführungen sind in den Unteransprüchen aufgezeigt.

Die Ableitung des Bestromungsmusters für den EC-Motor erfolgt beispielsweise durch eine feste Zuordnung zwischen einem bestimmten Wertebereich des Stellwinkels des Stellorgans und einem bestimmten bzw. entsprechenden Bestromungsmuster für den Motor (dessen Wicklungen), die auch in einer separaten Steuerung hinterlegt werden können. Diese Zuordnung kann aber auch auf Grund der erwähnten Proportionalität zwischen beiden errechnet werden. Weiterhin ist es möglich, die Zuordnung des Bestromungsmusters zur Stellung des Stellorgans durch einen Lernzyklus exemplartypisch zu ermitteln und abzuspeichern.
Durch eine derartige Vorgehensweise lassen sich außerdem Fertigungstoleranzen ausgleichen.

Durch den Wegfall einer eigenen Rotorlageerkennung vereinfacht sich der Aufbau des EC-Motors. Das Signal des Stellgebers wird einmal als Istwert für die Lageregelung wie bei konventionellen Stellorganen und zum anderen zur Bestimmung bzw. Auswahl des Bestromungsmusters genutzt.

Der Begriff Stellorgan umfaßt Drosselklappen und sonstige Klappen in einem Fahrzeug, wie Kraftfahrzeug, Flugzeug, Nutzfahrzeug etc..

Anhand eines Ausführungsbeispieles mit Zeichnung soll die Erfindung näher erläutert werden.
Es zeigt
- Fig. 1: eine blockschaltbildartige Darstellung der Lösung
- Fig. 2: eine Darstellung des Motors an einem Stellorgan aus Fig. 1.

Mit dem Bezugszeichen 1 ist eine Motorsteuerung, z.B. ein Mikrocomputer (µC), gekennzeichnet. Diese ist über einen Leistungsverstärker 2 mit einem elektronisch kommutierten Motor 3 verbunden. Der EC-Motor 3 wiederum wirkt über ein Getriebe 4 auf ein Stellorgan 5 ein. Das Stellorgan 5 ist hier beispielsweise eine Drosselklappe an einer nicht näher dargestellten Brennkraftmaschine eines Kraftfahrzeuges. Als Stellungsgeber 6 zur Ermittlung der Stellung des Stellorgans 5 ist in dieser Ausführungsform ein Potentiometer im Einsatz. Es kann aber auch eine Sensorik 10, verwendet werden, wie im weiteren noch ausgeführt wird. Dann dient als Information über die Stellung des Stellorgans 5 das Signal dieser Sensorik 10.

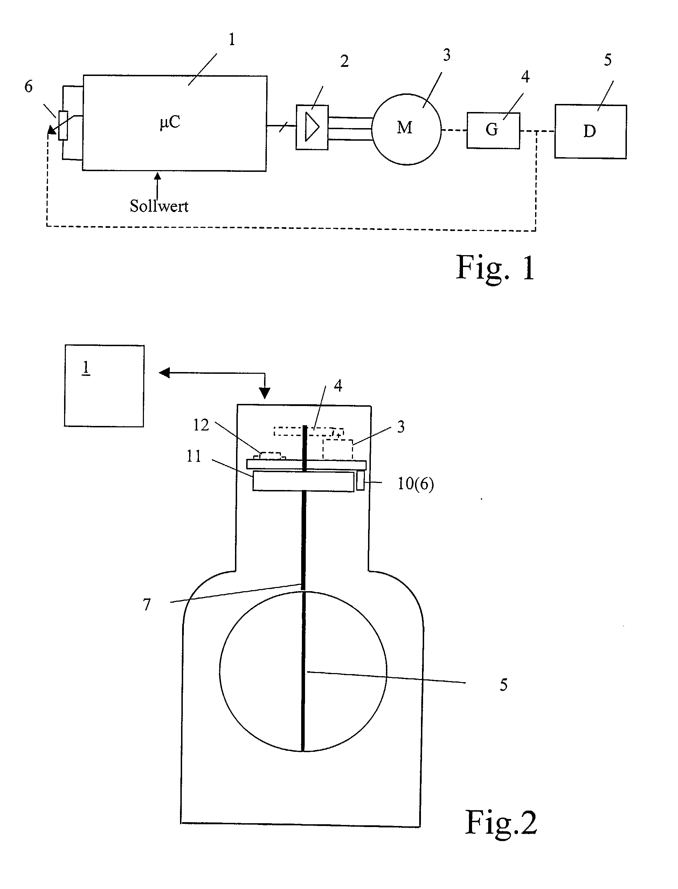

Figur 2 zeigt in einer vereinfachten Darstellung die mechanische Verbindung zwischen dem Motor 3 und dem Stellorgan 5. Der Motor 3 ist über das Getriebe 4 mit dem Stellorgan 5 im Eingriff. Das Stellorgan 5 wird über das Getriebe 4 und seine Welle 7 vom Motor 3 angetrieben, d.h., verstellt. In bekannter Art und Weise erhält der Motor 3 dazu vom Leistungsverstärker 2 und dieser vom Mikrocomputer 1 ein Signal zur Verstellung. Gleichzeitig mit der Drehverstellung der Welle 7 wird ein auf der Welle 7 angebrachter Magnet 11 gegenüber der Sensorik 10 mit verstellt. Über diese Sensorik 10 wird in bekannter Art und Weise die Stellung des Stellorgans 5 ermittelt. Diese Sensorik 10 kann ein Hall-Geber sein. Der Vollständigkeit halber sind mit 12 weitere Bauelemente der Steuerschaltung gekennzeichnet.

Das Bestromungssignal bzw. Bestromungsmuster, d.h. die Kommutierungswinkel, für den Motor 3 zur Verstellung des Stellorgans 5 wird in Abhängigkeit des Signals der Stellungsgebers 6 bestimmt.

Zur Ermittlung dieses Bestromungsmusters wird nach Einbau des Motors 3 in das Stellorgan 5 und dem Anschluß an die Steuerelektronik durch Bestromung einer oder mehrere Wicklungen der Läufer (Rotor) des Motors 3 in eine definierte Ausgangsposition gebracht. In dieser Position kann der Wert, welcher der Stellung des Stellorgans 5 entspricht, gemessen werden. Daraus läßt sich ein Korrekturwert berechnen, der eine in der Motorsteuerung 1 abgelegte Zuordnungstabelle an das betreffende Exemplar des Stellorgans 5 (Stellertyp) anpaßt, oder der als absolutes Glied in einem Rechenalgorythmus dient. Auch eine komplette Zuordnungstabelle kann so in einem Lernzyklus aufgenommen und in der Motorsteuerung 1 abgespeichert werden.

## Patentansprüche

1. Motoransteuerung zur Steuerung eines Motors zur Verstellung eines Stellorgans mit einem Stellgeber, **dadurch gekennzeichnet, dass**
- der Motor (3) ein elektronisch kommutierter Motor ist, dessen
- Bestromungsmuster in Abhängigkeit vom Signal des Stellgebers (6, 10) des Stellorgans (5) ermittelt wird, wobei
- die genauen Bestromungsimpulse exemplarisch ermittelt und /oder berechnet und
- in der Motorsteuerung (1) hinterlegt werden.

2. Motoransteuerung nach Anspruch 1, **dadurch gekennzeichnet, dass** der EC-Motor (3) keinen eigenen Rotorlagesensor aufweist.

3. Motoransteuerung nach Anspruch 1 oder 2, **dadurch gekennzeichnet, dass** das Bestromungsmuster in einer Bestromungstabelle hinterlegt ist.

4. Motoransteuerung nach einem der Ansprüche 1 bis 3, **dadurch gekennzeichnet, dass**
- das Bestromungsmuster durch Bestromung einer oder mehrere Wicklungen des Läufers des Motors (3) nach Einbau in das Stellorgan (5) ermittelt wird, wozu
- der Läufer in eine definierte Ausgangsposition gebracht wird,
- von der ausgehend eine nächste Position angefahren wird und
- anhand der beiden so gewonnenen Positionssignale über eine
- in der Motorsteuerung (1) abgelegte Tabelle / Kurve / Kennlinie die genauen Kommutierungswinkel berechnet werden.

5. Motoransteuerung nach einem der Ansprüche 1 bis 4 , **dadurch gekennzeichnet, dass** der Stellgeber (6) ein Potentiometer ist.

6. Motoransteuerung nach einem der Ansprüche 1 bis 4, **dadurch gekennzeichnet, dass** der Stellgeber (6) durch eine Sensorik (10) verkörpert wird.

7. Motoransteuerung nach Anspruch 4, **dadurch gekennzeichnet, dass** Korrekturwert einbezogen wird, der die in der Motorsteuerung (1) abgelegte Zuordnungstabelle an das betreffende Exemplar des Stellorgans (5) anpaßt oder als absolutes Glied im Rechenalgorythmus dient.
